# EUROPÄISCHE PATENTSCHRIFT

(11) **EP 1 171 535 B1**
(45) Veröffentlichungstag und Bekanntmachung des Hinweises auf die Patenterteilung: **20.07.2005**
(21) Anmeldenummer: 00912542.8
(22) Anmeldetag: 03.03.2000
(51) Int. Cl.: C09D 175/06

(54) **WASSERVERDÜNNBARES ÜBERZUGSMITTEL**
WATER-DILUTABLE COATING
MATERIAU DE REVETEMENT DILUABLE DANS L'EAU

(30) Priorität: 27.03.1999 DE 19914055
(43) Veröffentlichungstag der Anmeldung: 16.01.2002
(73) Patentinhaber: BASF Coatings AG, 48165 Münster (DE)
(72) Erfinder: STENGER, Michael, D-48291 Telgte (DE); MOLKE, Sabine, D-59227 Ahlen (DE)
(74) Vertreter: Fitzner, Uwe, Dr.
(86) Internationale Anmeldenummer: PCT/EP2000/001842
(87) Internationale Veröffentlichungsnummer: WO 2000/058413

(56) Entgegenhaltungen:
- EP-A- 0 438 090
- EP-A- 0 669 352
- WO-A-91/12899
- WO-A-92/15405

## Beschreibung

Die vorliegende Erfindung betrifft ein wasserverdünnbares Überzugsmittel, das sich insbesondere zur Beschichtung von Metallen und Kunststoffen eignet.

Bei der Lackierung insbesondere von Automobilkarosserien müssen heute Beschichtungen mit den verschiedensten Überzügen durchgeführt werden. Beispielsweise werden Automobile, die mit Metalliclacken versehen sind, mit einer weiteren Schicht Klarlack beaufschlagt. Auf der anderen Seite müssen in den Lackiererein auch Nicht-Metalliclacke aufgetragen werden. Aus ökonomischen Gründen werden die auf die Metalliclacke aufgebrachten Klarlacke und die Einschicht-Nicht-Metalliclacke heute in denselben Anlagen auf die Karosserien aufgebracht. Dies führt immer wieder zu Lackierfehlem, wie Farbverschleppung des farbigen Einschichtlackes in eine Klarlackcharge.

Im Automobilbau werden heute zunehmend Kunststoffteile verwendet. Hieraus ergibt sich der Wunsch des Kunden, auch diese Kunststoffteile zu lackieren. Die bisher auf dem Markt befindlichen Lacke sind nicht geeignet, gleichermaßen Metall und Kunststoff ohne Qualitätsverlust zu beschichten.

Aufgabe der vorliegenden Erfindung ist es demgemäß, ein wasserverdünnbares Überzugsmittel enthaltend Polyester, Polyurethan, Aminoplastharze sowie weitere lackübliche Zusatz- und Hilfsstoffe zur Verfügung zu stellen, durch dessen Einsatz die bisher auf den Lackierstraßen auftretenden Lackierfehler vermieden werden und der sich außerdem für die Beschichtung von Metall- und Kunststoffteilen gleichermaßen eignet.

Diese Aufgabe wird dadurch gelöst, daß das eingesetzte Polyurethan ein Gemisch ist, bestehend aus zwei unterschiedlichen Polyurethanverbindungen (A,B), im Gewichtsverhältnis der Polyurethanverbindungen (A, B) zwischen 3:1 und 1:3, wobei Polyurethanverbindung (A) erhältlich ist unter Verwendung eine Diisocyanates der Formel (I) 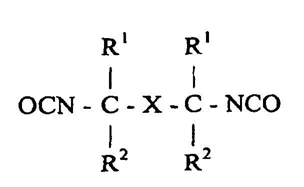 wobei X für einen zweiwertigen, aromatischen Kohlenwasserstoffrest und R¹, R² für einen Alkylrest mit ein bis vier Kohlenstoffatomen stehen und die vorzugsweise ein Molekulargewicht von 1000 bis 30000 und vorzugsweise eine Säurezahl von 5 bis 20 mg KOH/g aufweisen und vorzugsweise durch Umsetzung von Isocyanatgruppen aufweisenden Präpolymeren herstellbar sind.

Als Bindemittel werden vorzugsweise wasserverdünnbare bzw. wasserdispergierbare und in organischer Lösung darstellbare Polyurethanharze, Polyesterharze und Aminoplastharze sowie deren Mischungen eingesetzt.

Die als Bindemittel in den Basisfarben eingesetzten Polyurethanharze sind prinzipiell bekannt. Geeignet sind beispielsweise die in der Literatur für den Einsatz in Wasserbasislacken beschriebenen Polyurethanharze, sofern diese Polyurethanharze - in Abwandlung der in der jeweiligen Literatur beschriebenen Herstellung - in Form organischer Lösungen darstellbar sind.

Beispiele für geeignete Polyurethanharze sind die in den folgenden Schriften beschriebenen Harze:
EP-A-355433, DE-OS 3545618, DE-OS 3813866 und DE-OS 4005961.8.

Bezüglich näherer Einzelheiten der Herstellung der Polyurethanharze und Beispiele geeigneter Verbindungen sei daher auf diese Schriften verwiesen. Die Polyurethanharze kommen allerdings im Unterschied zu den in diesen Schriften beschriebenen Polyurethanharzen nicht als wäßrige Dispersion, sondern in einem oder mehreren organischen Lösungsmitteln gelöst zum Einsatz. Dies bedeutet, daß das Herstellverfahren der erfindungsgemäß eingesetzten Polyurethanharze gegenüber den in diesen Schriften beschriebenen Verfahren dahingehend geändert wurde, daß statt der Herstellung einer Sekundärdispersion ein Lösen der Polyurethanharze in organischen Lösemitteln erfolgt.
Bevorzugt werden wasserverdünnbare Polyurethanharze eingesetzt, die ein zahlenmittleres Molekulargewicht (Bestimmung: gelpermeationschromatographisch mit Polystyrol als Standard) von 1000 bis 30.000, vorzugsweise von 1500 bis 20000, sowie eine Säurezahl von 5 bis 70 mg KOH/g, vorzugsweise 10 bis 30 mg KOH/g und ebenso bevorzugt zwischen 5 und 20 mg KOH/g aufweisen und durch Umsetzung, vorzugsweise Kettenverlängerung, von Isocyanatgruppen aufweisenden Präpolymeren herstellbar sind.

Die Herstellung des isocyanatgruppenhaltigen Präpolymeren kann durch Reaktion von Polyolen mit einer Hydroxylzahl von 10 bis 1800, bevorzugt 50 bis 1200 mg
KOH/g, mit überschüssigen Polyisocyanaten bei Temperaturen von bis zu 150 ⁰C, bevorzugt 50 bis 130 ⁰C, in organischen Lösemitteln, die nicht mit Isocyanaten reagieren können, erfolgen. Das Äquivalentverhältnis von NCO- zu OH-Gruppen liegt zwischen 2,0:1,0 und > 1,0:1,0, bevorzugt zwischen 1,4:1 und 1,1:1.

Die zur Herstellung des Präpolymeren eingesetzten Polyole können niedermolekular und/oder hochmolokular sein und sie können reaktionsträge anionische Gruppen enthalten. Um die Härte des Polyurethans zu erhöhen, kann man niedermolekulare Polyole einsetzen. Sie haben ein Molekulargewicht von 60 bis zu etwa 400, und können aliphatische, alicyclische oder aromatische Gruppen enthalten. Es werden dabei Mengen von bis zu 30 Gew.-% der gesamten Polyol-Bestandteile, bevorzugt etwa 2 bis 20 Gew.-%, eingesetzt.

Um ein NCO-Präpolymeres hoher Flexibilität zu erhalten, sollte ein hoher Anteil eines überwiegend linearen Polyols mit einer bevorzugten OH-Zahl von 30 bis 150 mg KOH/g zugesetzt werden. Bis zu 97 Gew.-% des gesamten Polyols können aus gesättigten und ungesättigten Polyestern und/oder Polyethern mit einer Molmasse Mn von 400 bis 5000 bestehen. Die ausgewählten Polyetherdiole sollen keine übermäßigen Mengen an Ethergruppen einbringen, weil sonst die gebildeten Polymere in Wasser anquellen. Polyesterdiole werden durch Veresterung von organischen Dicarbonsäuren oder ihren Anhydriden mit organischen Diolen hergestellt oder leiten sich von einer Hydroxicarbonsäure oder einem Lacton ab. Um verzweigte Polyesterpolyole herzustellen, können in geringem Umfang Polyole oder Polycarbonsäuren mit einer höheren Wertigkeit eingesetzt werden.

Als typische multifunktionelle Isocyanate werden aliphatische, cycloaliphatische und/oder aromatische Polyisocyanate mit mindestens zwei Isocyanatgruppen pro Molekül verwendet. Bevorzugt werden die Isomeren oder Isomerengemische von organischen Diisocyanaten. Aufgrund ihrer guten Beständigkeit gegenüber ultraviolettem Licht ergeben (cyclo)aliphatische Diisocyanate Produkte mit geringer Vergilbungsneigung.
Die zur Bildung des Präpolymeren gebrauchte Polyisocyanat-Komponente kann auch einen Anteil höherwertiger Polyisocyanate enthalten, vorausgesetzt dadurch wird keine Gelbildung verursacht. Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Die mittlere Funktionalität kann gegebenenfalls durch Zusatz von Monoisocyanaten gesenkt werden.

Erfindungsgemäß wird ein Gemisch von 2 verschiedenen Polyurethanen A und B im Gewichtsverhältnis 3:1 bis 1:3, bevorzugt 2:1 bis 1:2 eingesetzt.

Zur Herstellung der Polyurethanharzlösung A werden Diisocyanate der allgemeinen Formel (I) 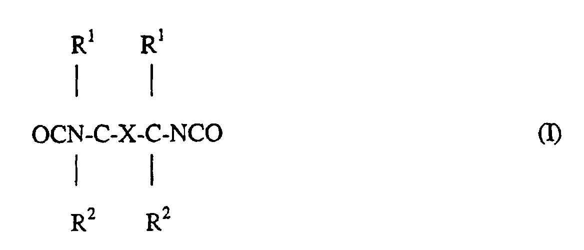 eingesetzt, wobei X für einen zweiwertigen, aromatischen Kohlenwasserstoffrest, vorzugsweise für einen gegebenenfalls halogen-, methyl- oder methoxysubstituierten Naphtylen-, Biphenylen- oder 1,2-, 1,3- oder 1,4-Phenylenrest, besonders bevorzugt für einen 1,3-Phenylenrest und R¹ und R² für einen Alkylrest mit 1 bis 4 Kohlenstoffatomen, besonders bevorzugt für einen Methylrest stehen. Diisocyanate der Formel (I) sind bekannt (ihre Herstellung wird beispielsweise in der EP-A-101 832, US-PS-3,290,350, UP-PS-4,130,577 und US-PS-4,439,616 beschrieben) und zum Teil im Handel erhältlich (1,3-Bis(2-isocyanatoprop-2-yl)benzol wird beispielsweise von der American Cyanamid Company unter dem Handelsnamen TMXDI (META)^{R} verkauft).

Zur Herstellung der weiteren Polyurethankomponente B werden anstelle der Diisocyanate der Formel (I) noch andere aliphatische und/oder cycloalipatische und/oder aromatische Polyisocyanate eingesetzt. Als Beispiele für zusätzlich einsetzbare Polyisocyanate werden Phenylendiisocyanat,Toluylendiisocyanat, Xylylendiisocyanat, Bisphenylendiisocyanat, Naphtylendiisocyanat, Diphenylmethandiisocyanat, Isophorondiisocyanat, Cyclopentylendiisocyanat, Cyclohexylendiisocyanat, Methylcyclohexylendiisocyanat, Dicyclohexylmethandiisocyanat, Trimethylendiisocyanat, Tetramethylendiisocyanat, Pentamethylendiisocyanat, Hexamethylendiisocyanat, Propylendiisocyanat, Ethylethylendiisocyanat und Trimethylhexandiisocyanat genannt.

Ganz besonders bevorzugt wird der Einsatz von Isophorondiisocyanat und Hexamethylendiisocyanat. Letzteres ist unter der Bezeichnung HMDI-DESMODUR (Markenname der Firma Bayer AG) im Handel erhältlich.

Polyurethane sind im allgemeinen nicht mit Wasser verträglich, wenn nicht bei ihrer Synthese spezielle Bestandteile eingebaut und/oder besondere Herstellungsschritte vorgenommen werden. So können zur Herstellung der Polyurethanharze Verbindungen verwendet werden, die zwei mit Isocyanatgruppen reagierende H-aktive Gruppen und mindestens eine Gruppe enthalten, die die Wasserdispergierbarkeit gewährleistet (Trägergruppen). Geeignete Trägergruppen sind nichtionische Gruppen (z.B. Polyether), anionische Gruppen, Gemische dieser beiden Gruppen oder kationische Gruppen.

So kann eine so große Säurezahl in das Polyurethanharz eingebaut werden, daß das neutralisierte Produkt stabil in Wasser zu dispergieren ist. Hierzu dienen Verbindungen, die zwei mit Isocyanatgruppen reagierende H-aktive Gruppen und mindestens eine zur Anionenbildung befähigte Gruppe enthalten. Geeignete, mit Isocyanatgruppen reagierende Gruppen sind insbesondere Hydroxylgruppen sowie primäre und/oder sekundäre Aminogruppen. Gruppen, die zur Anionenbildung befähigt sind, sind Carboxyl-, Sulfonsäure- und/oder Phosphonsäuregruppen. Bevorzugt werden Carbonsäure- oder Carboxylatgruppen verwendet. Sie sollen so reaktionsträge sein, daß die Isocyanatgruppen des Diisocyanats vorzugsweise mit den anderen gegenüber Isocyanatgruppen reaktiven Gruppen des Moleküls reagieren. Es werden dazu Alkansäuren mit zwei Substituenten am α-ständigen Kohlenstoffatom eingesetzt.

Der Substituent kann eine Hydroxylgruppe, eine Alkylgruppe oder eine Alkylolgruppe sein. Diese Polyole haben wenigstens eine, im allgemeinen 1 bis 3 Carboxylgruppen im Molekül. Sie haben zwei bis etwa 25, vorzugsweise 3 bis 10 Kohlenstoffatome. Das Carboxylgruppen enthaltene Polyol kann 3 bis 100 Gew.-%, vorzugsweise 5 bis 50 Gew.-%, des gesamten Polyolbestandteiles im NCO-Präpolymeren ausmachen.

Die durch die Carboxylgruppen-Neutralisation in Salzform verfügbare Menge an ionisierbaren Carboxylgruppen beträgt im allgemeinen wenigstens 0,4 Gew.-%, vorzugsweise wenigstens 0,7 Gew.-%, bezogen auf den Feststoff. Die obere Grenze beträgt etwa 6 Gew.-%. Die Menge an Dihydroxialkansäuren im unneutralisierten Präpolymeren ergibt eine Säurezahl von wenigstens 5, vorzugsweise wenigstens 10. Bei sehr niedrigen Säurezahlen sind i.a. weitere Maßnahmen zur Erzielung der Wasserdispergierbarkeit erforderlich. Die obere Grenze der Säurezahl liegt bei 70, vorzugsweise bei 40 mg KOH/g, bezogen auf den Feststoff.

Die erfindungsgemäß verwendeten NCO-Präpolymeren können durch gleichzeitige Umsetzung des Polyols oder Polyolgernisches mit einem Diisocyanat-Überschuß hergestellt werden. Andererseits kann die Umsetzung auch in vorgeschriebener Reihenfolge stufenweise vorgenommen werden. Beispiele sind in der DE OS 26 24 442 und der DE OS 32 10 051 beschrieben. Die Reaktionstemperatur beträgt bis zu 150 ⁰C, wobei eine Temperatur im Bereich von 50 bis 130 ⁰C bevorzugt wird.

Die Umsetzung wird fortgesetzt, bis praktisch alle Hydroxylfunktionen umgesetzt sind.
Das NCO-Präpolymer enthält wenigstens etwa 0,5 Gew.-% Isocyanatgruppen, vorzugsweise wenigstens 1 Gew-% NCO, bezogen auf Feststoff. Die obere Grenze liegt bei etwa 15 Gew.-%, vorzugsweise 10 Gew.-%, besonders bevorzugt bei 5 Gew.-%.

Die Umsetzung kann gegebenenfalls in Gegenwart eines Katalysators, wie Organozinnverbindungen und/oder tertiären Aminen durchgeführt werden. Um die Reaktionsteilnehmer in flüssigem Zustand zu halten und eine bessere Temperaturkontrolle während der Reaktion zu ermöglichen, ist der Zusatz von organischen Lösemitteln, die keinen aktiven Wasserstoff nach Zerewitinoff enthalten, möglich. Die Menge an Lösemittel kann in weiten Grenzen variieren und sollte zur Bildung einer Präpolymer-Lösung mit geeigneter Viskosität ausreichen. Im allgemeinen werden 10 bis 70 Gew.-% Lösemittel, vorzugsweise 20 bis 50 Gew.-% Lösemittel, bezogen auf den Festkörper eingesetzt.

Die noch vorhandenen Isocyanatgruppen des Präpolymers werden mit einem Modifizierungsmittel umgesetzt. Diese Reaktion führt insbesondere zu einer weiteren Verknüpfung und Erhöhung des Molekulargewichts. Die Menge dieses Modifizierungsmittels wird durch seine Funktionalität und den NCO-Gehalt des Präpolymeren bestimmt. Das Aquivalentverhältnis der aktiven Wasserstoffatome im Modifizierungsmittel zu den NCO-Gruppen im Präpolymer sollte in der Regel geringer als 3:1 sein und vorzugsweise im Bereich zwischen 1:1 und 2:1 liegen.

Bevorzugt werden als Modifizierungsmittel für die Umsetzung mit dem Präpolymer Di-, besonders bevorzugt Tri- und/oder Polyole eingesetzt.

Es können aber auch andere Verbindungen mit aktiven Wasserstoffatomen als Modifizierungsmittel eingesetzt werden, beispielsweise Polyamine, allerdings nur unter der Voraussetzung, daß die Umsetzung des Präpolymers mit dem Modifizierungsmittel in einem organischen Lösemittel durchführbar (kontrollierbar) ist und bei dieser Reaktion keine unerwünschten Reaktionen, wie z. B. die bei Einsatz von Polyaminen häufig beobachtete Gelierung an der Eintropfstelle des Amins, auftreten.
Als Beispiel für mindestens drei Hydroxylgruppen enthaltene Polyole seien Trimethylolpropan, Glycerin, Erythrit, Mesoerythrit, Arabit, Adonit usw. genannt. Bevorzugt wird Trimethylolpropan eingesetzt. Die Umsetzung des Präpolymeren mit den Tri- und/oder Polyolen wird vorzugsweise durch die Stöchiometrie der eingesetzten Verbindungen so gesteuert, daß es zu Kettenverlängerungen kommt.

Dem erfindungsgemäßen Überzugsmittel werden auch wasserverdünnbare bzw. wasserdispergierbare und in Form organischer Lösungen darstellbare Polyesterharze zugesetzt. Eingesetzt werden beispielsweise entsprechende handelsübliche wasserverdünnbare bzw. wasserdispergierbare Polyesterharze sowie die überlicherweise in Wasserbasislacken eingesetzten Polyesterharze.

Das erfindungsgemäße Überzugsmittel enthält femer auch wasserverdünnbare bzw. wasserdispergierbare Aminoplastharze. Bevorzugt werden wasserverdünnbare Melaminharze eingesetzt. Es handelt sich hierbei im allgemeinen um veretherte Melamin-Formaldehyd-Kondensationsprodukte.
Die Wasserlöslichkeit der Aminoplastharze hängt - abgesehen vom Kondensationsgrad, der möglichst gering sein soll - von der Veretherungskomponente ab, wobei nur die niedrigsten Glieder der Alkohol bzw. Ethylenglykolmonoetherreihe wasserlösliche Kondensate ergeben. Die größte Bedeutung haben die mit Methanol veretherten Melaminharze. Beispiele für erfindungsgemäß einsetzbare Melaminharze sind Cymel 327 der Firma Cytec und Luvipal 072 der Firma BASF AG. Bei Verwendung von Lösungsvermittlern können auch butanolveretherte Melaminharze in wäßriger Phase dispergiert werden. Es besteht auch die Möglichkeit, Carboxylgruppen in das Kondensat einzufügen. Umetherungsprodukte hochveretherter Formaldehydkondensate mit Oxycarbonsäuren sind über ihre Carboxylgruppen nach Neutralisation wasserlöslich und können in den Basisfarben enthalten sein.

Als Bindemittel können selbstverständlich auch Mischungen der genannten Bindemittel sowie zusätzlich andere wasserverdünnbare bzw. wasserdispergierbare Bindemittel eingesetzt werden.

Bevorzugt enthält das erfindungsgemäße Überzugsmittel als Bindemittel wasserverdünnbare Polyurethanharze oder wasserverdünnbare Aminoplastharze oder Mischungen aus wasserverdünnbaren Polyurethanharzen und Aminoplastharzen.

Das Verhältnis des Polyesters zum Polyurethan beträgt vorzugsweise 7:3 bis 9:1.

Das Verhältnis des Gemisches aus Polyurethan und Polyester zu Aminoplastharz liegt vorzugsweise zwischen 7:3 und 9:1.

Als Lösemittel enthält das Überzugsmittel ein oder mehrere organische Lösemittel. Beispiele für geeignete Lösemittel sind insbesondere wasserlösliche bzw. wasserverdünnbare Lösemittel, wie z.B. Alkohole, Ester, Ketone, Ketoester, Glykoletherester u.ä.. Bevorzugt eingesetzt werden Alkohole und Glykolether, besonders bevorzugt Butylglykol und Butanole.

Es besteht dabei die Möglichkeit, bereits bei der Herstellung der Bindemittel Lösemittel einzusetzen, die auch später als Lösemittel in der Basisfarbe verbleiben. Häufiger wird jedoch zur Herstellung der Bindemittel ein anderes Lösungsmittel eingesetzt, das nach der Herstellung der Bindemittel durch Vakuumdestillation oder Dünnschichtverdampfung schonend abdestilliert und durch ein Lösemittel ersetzt wird, das in der Bindemittellösung verbleibt, die dann in der Basisfarbe eingesetzt wird. Höhersiedende Lösemittel sollten wasserlöslich sein und verbleiben in der Polyurethanharzlösung, die in der Basisfarbe eingesetzt wird, um das Zusammenfließen der Polymerteilchen während der Filmbildung zu erleichtern.

So erfolgt beispielsweise die Herstellung der Polyurethanharzlösung in einem Keton, wie z.B. Methylethylketon oder Aceton. Nach Zugabe von Buylglykol erfolgt anschließend der Lösemittelaustausch durch destillative Entfernung des Ketons (Methylethylketon, Aceton). Besonders bevorzugt sind als Lösemittel für die Herstellung des Polyurethanharzes Methoxipropylacetat, Ethoxiethylacetat und N-Methylpyrrolin, die nicht ausgetauscht werden müssen (kein aktiver Wasserstoff) und in der Komponente A verbleiben können. Ggf. können diese Lösemittel für die Herstellung der Polyurethanharze auch im Gemisch mit Ketonen eingesetzt werden, wobei die Ketone aber nicht in der Basisfarbe verbleiben, sondern nach Herstellung des Polyurethanharzes ausgetauscht werden.

Das Gemisch kann alle lacküblichen Pigmente enthalten, insbesondere farbgebende Pigmente auf anorganischer oder organischer Basis.

Zur Herstellung des erfindungsgemäßen Lacks können alle üblicherweise bei der Formulierung von wäßrigen Überzugsmitteln eingesetzten Pigmente eingesetzt werden.

Beispiele für geeignete farbgebende Pigmente auf anorganischer Basis sind Titandioxid, Eisenoxide, Ruß u.ä.. Beispiele für geeignete farbgebende Pigmente auf organischer Basis sind Indathrenblau, Cromophthalrot, Irgazinorange, Sicotransgelb, Heliogengrün u.ä..

Das erfindungsgemäße Überzugsmittel kann außerdem noch übliche Hilfs- und Zusatzstoffe enthalten. Beispiele für derartige Additive sind Entschäumer, Dispergierhilfsmittel, Emulgatoren, Verlaufsmittel u.a..

Die Herstellung des erfindungsgemäßen Überzugsmittels erfolgt nach dem Fachmann bekannten Methoden durch Mischen und ggf. Dispergieren der einzelnen Komponenten. Die einzelnen Polyurethanverbindungen können zunächst miteinander gemischt werden und erst anschließend mit dem Polyester, Aminoplastharz sowie weiteren Zusatz- und Hilfsstoffen gemischt werden. Es ist erfindungsgemäß jedoch auch möglich, die Polyurethanverbindungen nacheinander mit den übrigen Stoffen zu vermischen.

Die Einarbeitung von farbgebenden Pigmenten üblicherweise durch Anreiben (Dispergieren) der jeweiligen Pigmente mit einem oder mehreren der oben beschriebenen Bindemittel, die bevorzugt in Form ihrer Lösungen in organischen Lösemitteln eingesetzt werden. Ggf. kann zum Anreiben noch weiteres organisches Lösemittel zugesetzt werden. Das Anreiben dieser Pigmente erfolgt mit Hilfe üblicher Vorrichtungen, wie beispielsweise Perlmühlen und Sandmühlen.

Die Einarbeitung der Effektpigmente erfolgt üblicherweise durch homogenes Mischen der Effektpigmente mit einem oder mehreren Lösemitteln. Diese Mischung wird dann in eine Mischung eines oder mehrerer der oben beschriebenen Bindemittel, ggf. unter Zusatz von weiteren organischen Lösemitteln, mittels eines Rührers oder Dissolvers eingerührt. Die Bindemittel werden bevorzugt in Form ihrer Lösungen in organischen Lösemitteln eingesetzt.

Die jeweiligen Mengenverhältnisse an Pigment, Bindemittel und Lösemittel richten sich dabei, wie dem Fachmann geläufig ist, nach dem Fließverhalten der Pigmentpaste und sind damit abhängig von dem jeweils verwendeten Pigment.

Im folgenden wird die Erfindung unter Bezugnahme auf die Beispiele näher beschreiben:

### I. Vergleich von Lacken mit unterschiedlichen Bindemittelanteilen

Zur Bestimmung der optimalen Bindemittelbestandteile wurde die in Tabelle 1 beschriebene Versuchsmatrix realisiert. Als Entscheidungsgrundlage wurde die in der Ford Engineering Material Specification ESK-M62J34A festgelegten kritischen Prüfungen gemäß der Ford Laboratory Test Method für Steinschlag BI 157-4, Haftung BI 106-1 A/BC und Wassereintauchtest BI 104-1 ausgewählt. Die Ford Engineering Material Specification ESK-M62J34A und die Ford Laboratory Test Method wird jedem Lackhersteller zur Verfügung gestellt.

Wie man anhand der in Tabelle 1 aufgeführten Ergebnisse sehen kann, zeigen die Formulierungen auf Basis des gepfropften Acrylates die schlechtesten Ergebnisse. Aufgrund der Haftung und des Blasenbildes beim Wassereintauchtest ist diese Bindemittelbasis nicht geeignet.

Bessere technologische Werte erreicht man bei Formulierungen mit Polyurethan, das durch Umsetzungen von Methatetramethylxylendiisocyanat (TMXDI-PUR) erhalten wurde. Hierbei ist der Einfluß verschiedener Melamin-Harze bis auf die Variante mit katalysiertem Cymel 303 vernachlässigbar.

Eine weitere signifikante Verbesserung bezüglich der Steinschlagprüfung erreicht man überraschend durch den Einsatz einer Polyurethan-Abmischung. Getestet wurden hierbei Gemische von TMXDI-PUR einerseits mit einem Polyurethan, erhalten durch Umsetzung mit Isophorondiisocyanat (IPDI-PUR) und andererseits mit einem Polyurethan, das durch Umsetzung mit Hexanmethylendiisocyanat erhalten wurde (DESMODUR-W-PUR).

### II. Prüfung auf Eignung für Kunststofflackierung

Für die Prüfung der Spezifikation ESK-M62J30A2 für die Kunststofflackierung wurden die Materialien gemäß Tabelle 3 eingesetzt. Die Prüfergebnisse zeigen, daß die erfindungsgemäßen Formulierungen 10 und 12 in allen Prüfpunkten deutliche Vorteile gegenüber den Kunststoffsystemen 11 und 13 aufweisen.

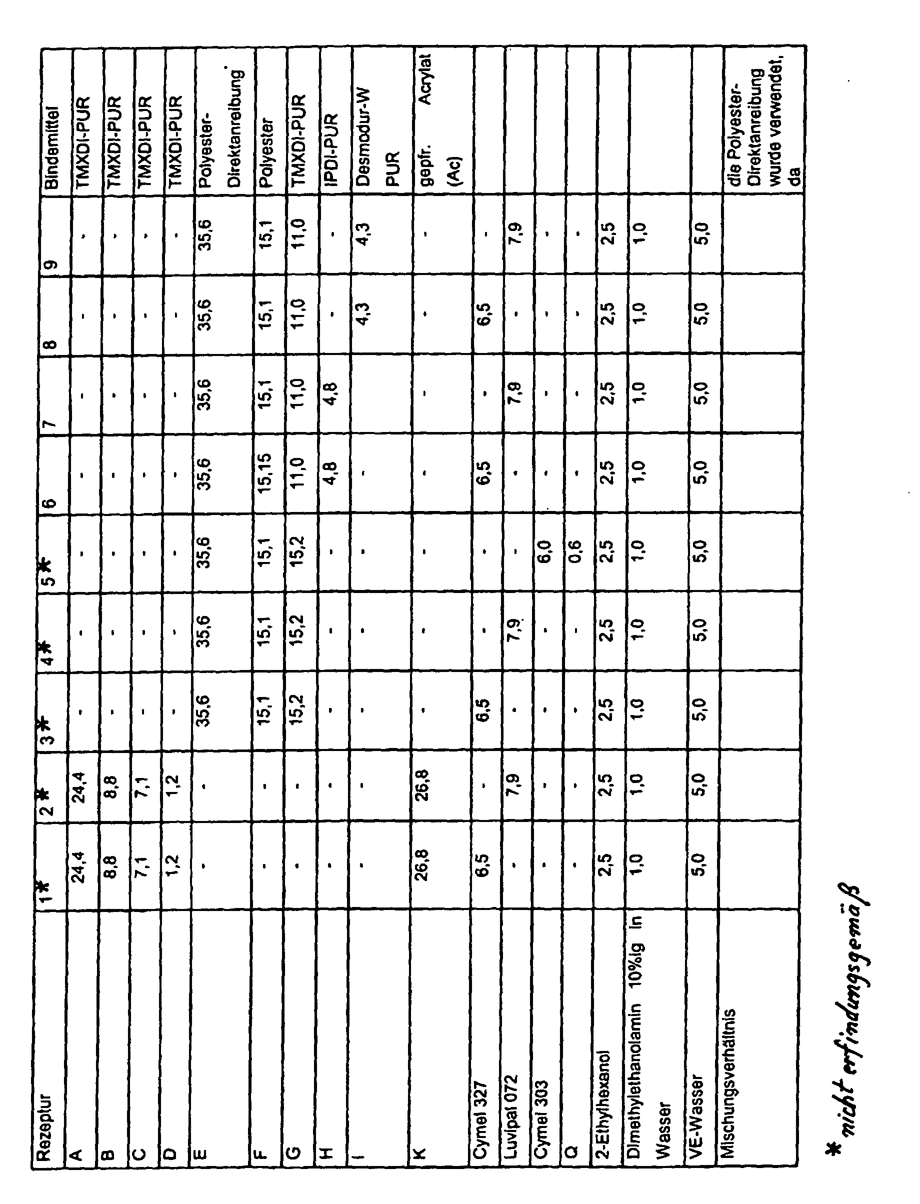

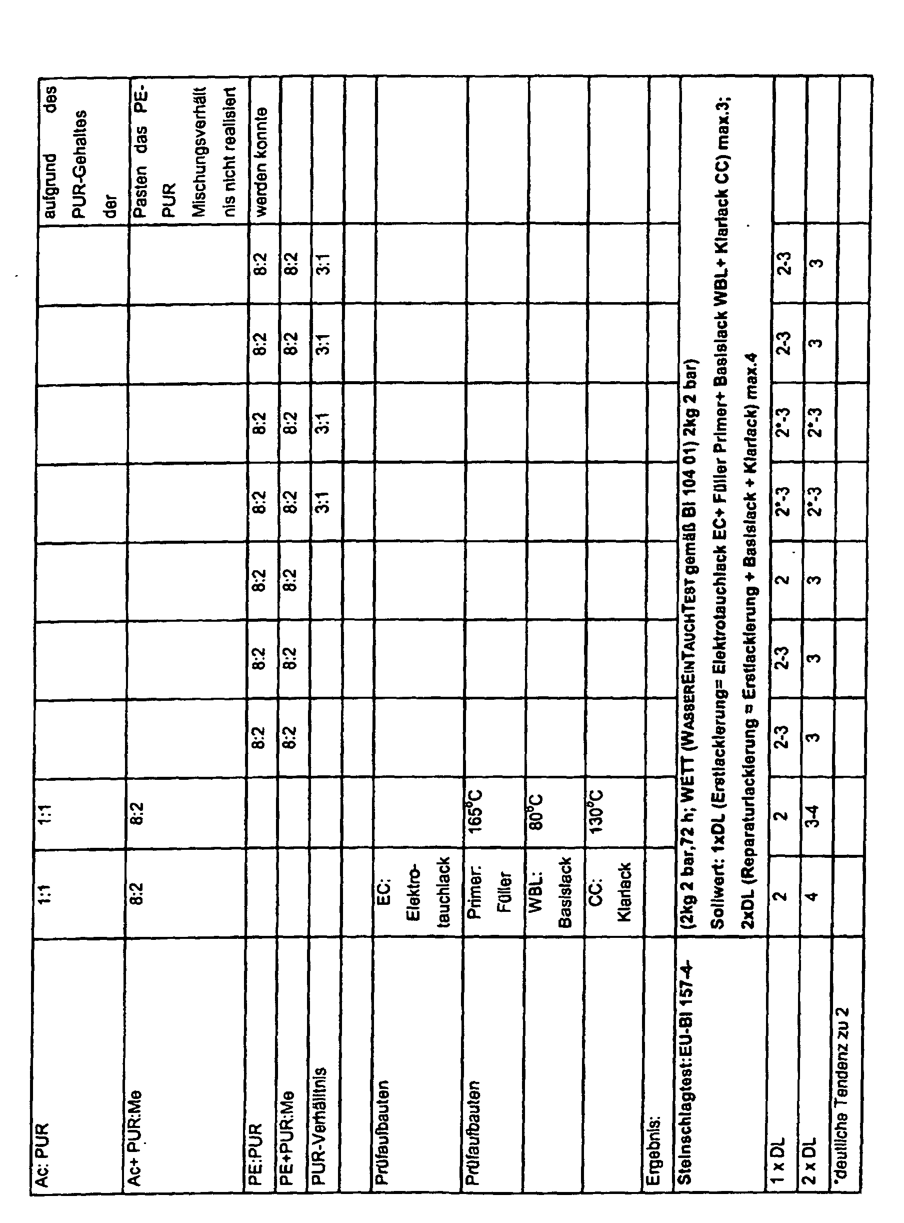

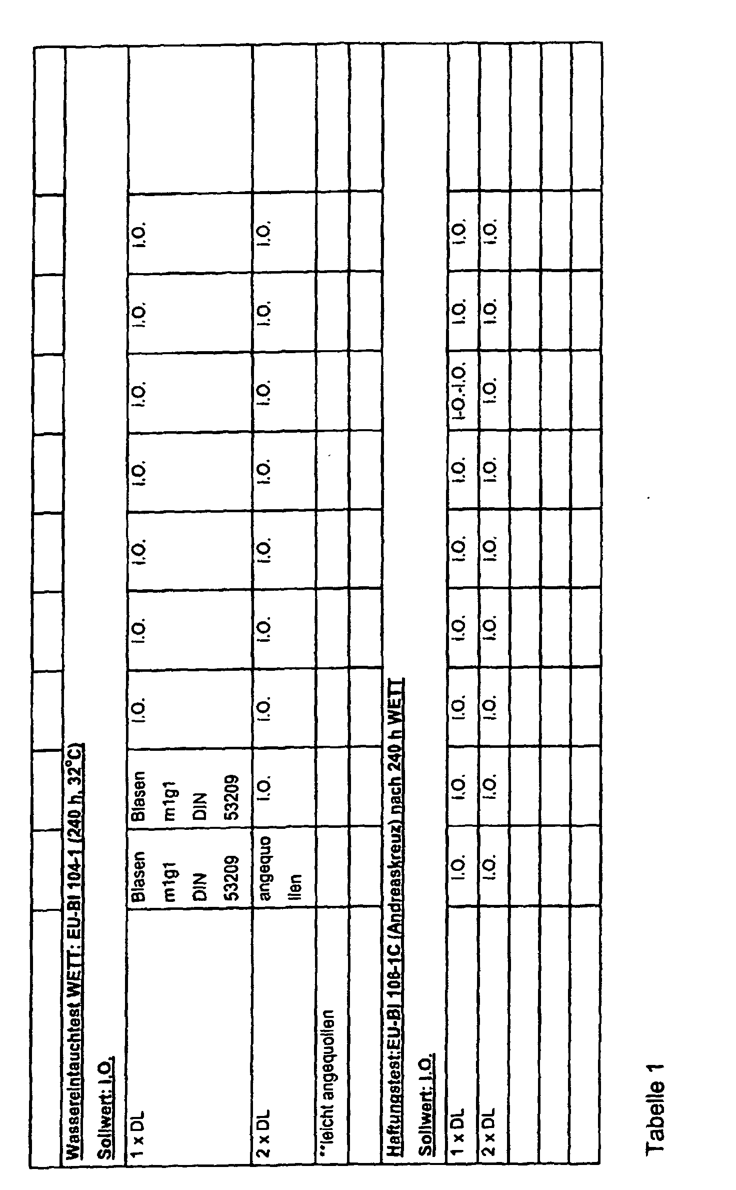

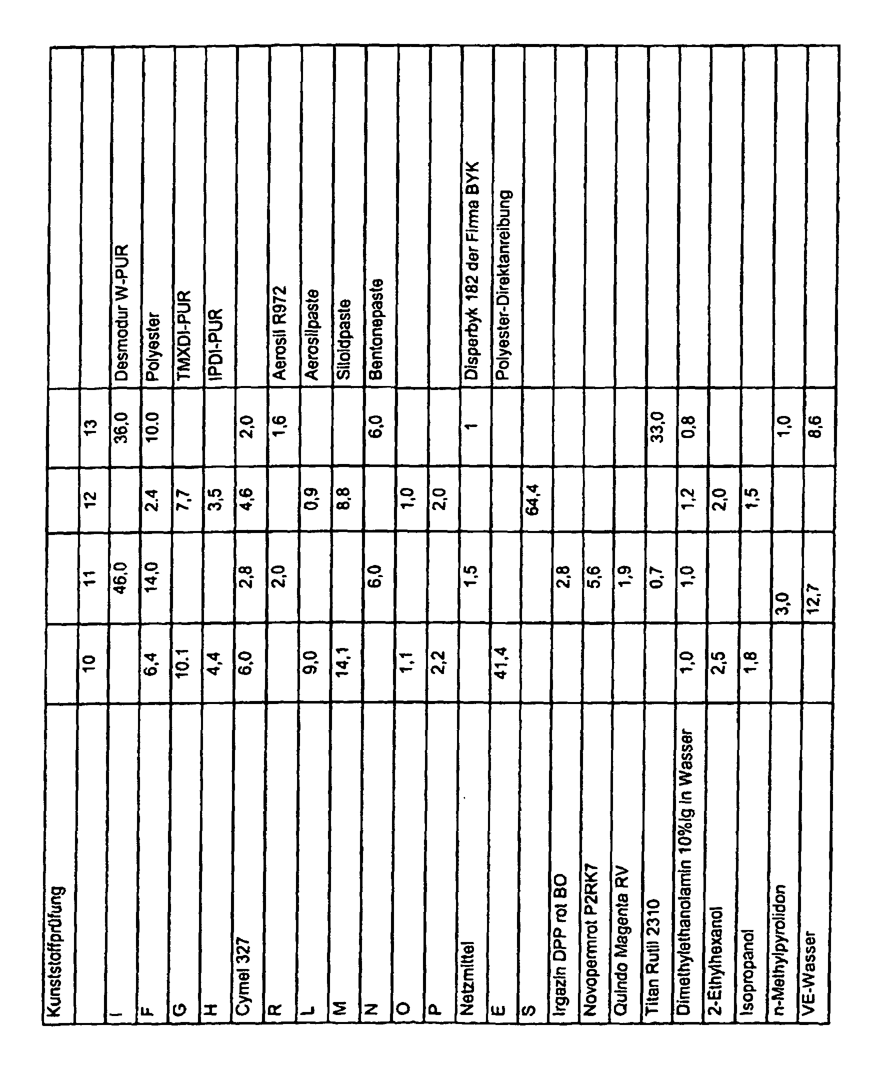

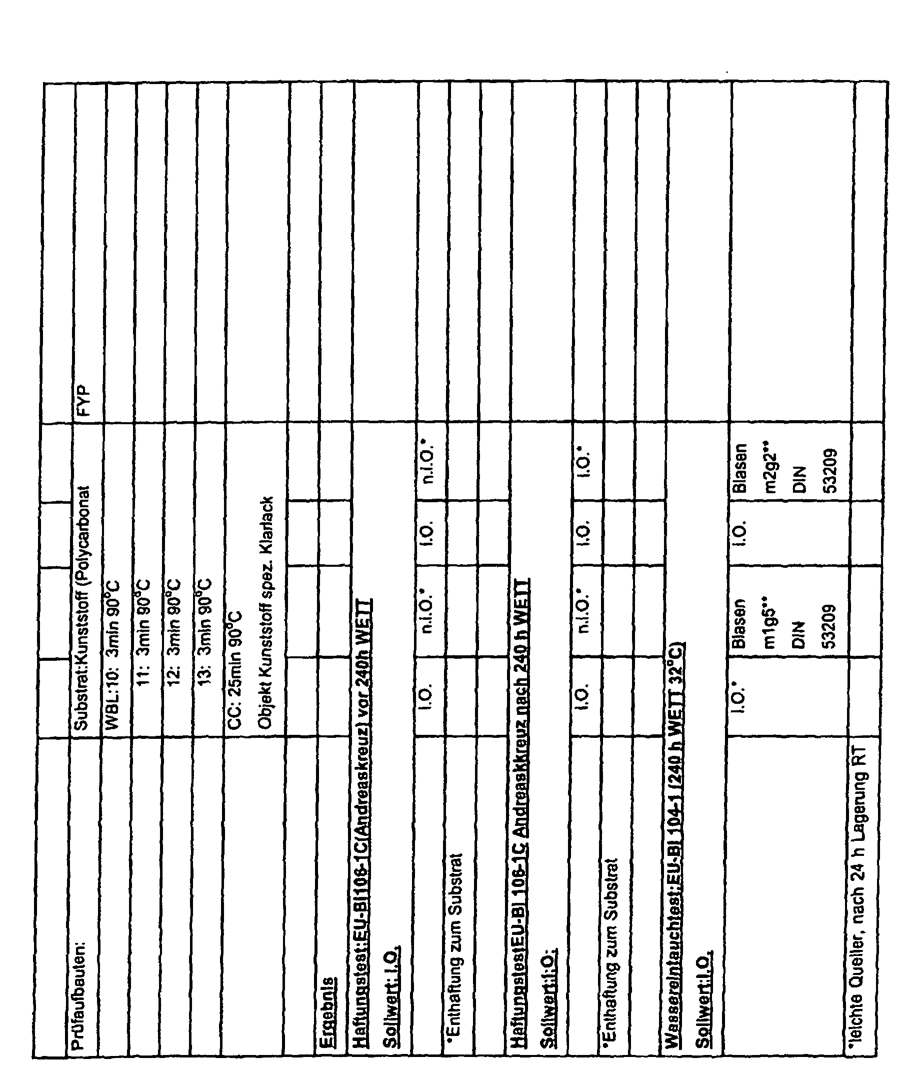

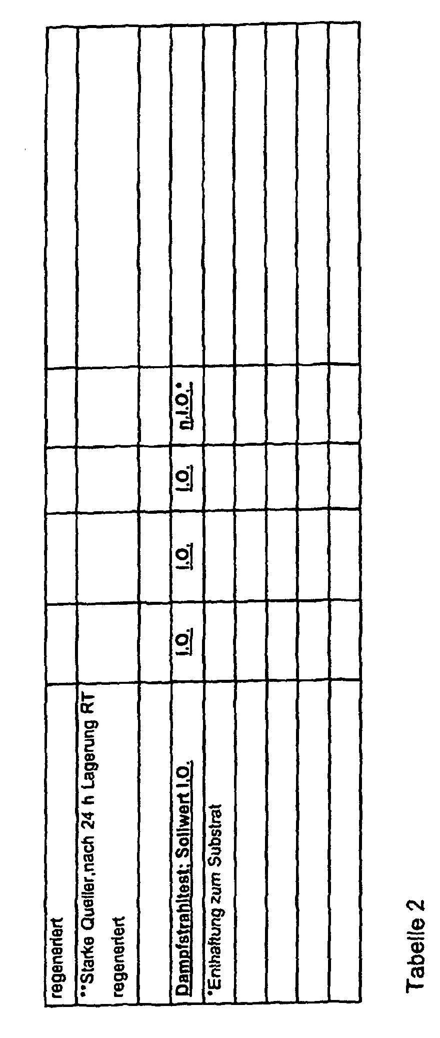

Die Rezepturen 6,7,8,9,10 und 12 sind die erfindungsgemäßen Überzüge. Hingegen sind die Rezepturen 1 bis 5 sowie 11 und 13 die Vergleiche nach dem Stand der Technik.

Die Aufschlüsselung der verwendeten Zusammensetzungen A - S können dem folgenden entnommen werden:

| | | | |
|---|---|---|---|
| A. | 74,6 | PARODUR EL 66.6 | TMXDI-PUR |
| | 2,0 | PLURIOL P 900 | Netzmittel |
| | 20,5 | NOVOPERM-ROT F2RK70 | Naphtolrot |
| | 1,0 | NEUTR.LSG.F.WASSER-BC | Dimethylethanolamin 10 %ig in VE-Wasser |
| | 1,6 | WASSER,VE | |
| | | | |
| B. | 66,4 | PARODUR EL 66.6 | TMXDI-PUR |
| | 28,4 | IRGAZIN DPP ROT BO | Pyrrolopyrrol |
| | 1,1 | NEUTR.LSG.F.WASSER-BC | Dimethylethanolamin 10 %ig in VE-Wasser |
| | 4,1 | WASSER,VE | |
| | | | |
| C. | 45,2 | PARODUR EL 66.6 | TMXDI-PUR |
| | 2,6 | PLURIOL P 900 | Netzmittel |
| | 6,3 | BUTYLDIGLYKOL | |
| | 9,6 | WASSER,VE | |
| | 24,0 | HOSTAPERM-ROSA E | Chinacridonrot |
| | 12,0 | WASSER,VE | |
| | 0,3 | NEUTR.LSG.F.WASSER-BC | Dimethylethanolamin 10 %ig in VE-Wasser |
| | | | |
| D. | 44,2 | PARODUR EL 66.6 | TMXDI-PUR |
| | 0,6 | AEROSIL R 972 | Siliciumoxid |
| | 0,5 | NEUTR.LSG.F.WASSER-BC | Dimethylethanolamin 10 %ig in VE-Wasser |
| | 54,5 | TITAN RUTIL 2310 | Titandioxid |
| | | | |
| E. | 36,1 | PAROTAL EF 83.6 | Polyester |
| | 1,4 | PLURIOL P 900 | Netzmittel |
| | 1,4 | NEUTR.LSG.F.WASSER7BC | Dimethylethanolamin 10 %ig in VE-Wasser |
| | 30,0 | WASSER,VE | |
| | 11,1 | NOVOPERM-ROT F 2 RK 70 | Naphtolrot |
| | 5,5 | IRGAZIN DPP ROT BO | Pyrrolopyrrol |
| | 3,8 | HOSTAPERM-ROSA E | Chinacridonrot |
| | 1,4 | TITAN RUTIL 2310 | Titandioxid |
| | 9,3 | WASSER,VE | |
| | | | |
| F. | 26,32 | PRIPOL 1009 | |
| | 10,63 | 1,6-HEXANDIOL | |
| | 7,48 | ISOPHTHALSAEURE 99% | |
| | 9,38 | NEOPENTYLGLYKOL | |
| | 0,70 | CYCLOHEXAN | |
| | 7,41 | TRIMELLITSAEUREANHYDRID | |
| | 14,50 | WASSER,VE | |
| | 5,00 | BUTYLDIGLYKOL | |
| | 2,40 | DIMETHYLETHANOLAMIN | |
| | 14,00 | BUTYLDIGLYKOL | |
| | 0,20 | DIMETHYLETHANOLAMIN | |
| | 1,98 | WASSER,VE | |
| | | | |
| G. | 24,882 | PAROTALEF03.0 | |
| | 0,264 | NEOPENTYLGLYKOL | |
| | 1,527 | DIMETHYLOLPROPIONSAEURE | |
| | 7,707 | TMXDI | Methatetramethylxylendiisocyanat |
| | 1,316 | TRIMETHYLOLPROPAN, 100% | |
| | 5,384 | BUTYLGLYKOL | |
| | 1,000 | BUTYLGLYKOL | |
| | 0,841 | DIMETHYLETHANOLAMIN | |
| | 55,000 | WASSER,VE | |
| | 2,079 | WASSER,VE | |
| | | | |
| H. | 20,092 | PAROTAL EF 98.3 | |
| | 0,196 | NEOPENTYLGLYKOL | |
| | 1,197 | DIMETHYLOLPROPIONSAEURE | |
| | 5,495 | ISOPHORONDIISOCYANAT IPDI | |
| | 5,387 | METHYLETHYLKETON | |
| | 0,504 | TRIMETHYLOLPROPAN, 100% | |
| | 3,123 | BUTYLGLYKOL | |
| | 0,602 | DIMETHYLETHANOLAMIN | |
| | 59,000 | WASSER,VE | |
| | 2,000 | BUTYI,GLYKOL | |
| | 2,404 | WASSER,VE | |
| | | | |
| I. | 17,921 | PAROTAL EF 98.3 | Polyester |
| | 1,169 | DIMETHYLOLPROPIONSAEURE | |
| | 0,243 | NEOPENTYLGLYKOL | |
| | 6,309 | HMDI-DESMODUR W, 100% | |
| | 5,504 | METHYLETHYLKETON | |
| | 0,607 | TRIMETHYLOLPROPAN, 100% | |
| | 0,339 | BUTANOL | |
| | 0,613 | DIMETHYLETHANOLAMIN | |
| | 4,281 | PLURIOL P 900 | |
| | 0,298 | METHYLETHYLKETON | |
| | 54,367 | WASSER,VE | |
| | 0,010 | DIMETHYLETHANOLAMIN | |
| | 8,339 | WASSER,VE | |
| | | | |
| L. | 30,0 | ISOPROPANOL | |
| | 16,5 | BUTYLGLYKOL | |
| | 31,0 | PAROTAL EF 83.6 | Polyester |
| | 2,5 | NEUTR.LSG.F.WASSER-BC | |
| | 12,0 | AEROSIL R 972 | Siliciumoxid |
| | 8,0 | WASSER,VE | |
| | | | |
| M. | 30,000 | PAROTAL EF 83.6 | Polyester |
| | 11,000 | NEUTR.LSG.F.WASSER-BC | |
| | 46,000 | BUTYLGLYKOL | |
| | 12,000 | SYLOID ED 3 | Siliciumomid |
| | 1,000 | WASSER,VE | |
| | | | |
| N. | 70,00 | WASSER,VE | |
| | 0,15 | MERGAL K 9N | |
| | 6,0 | BENTONE EW | |
| | 23,85 | WASSER,VE | |
| | | | |
| O. | 50,0 Verlaufsmittel | EFKA 772 60%SEK.BUTANOL | |
| | 50,0 | NEUTR.LSG.F.WASSER-BC | |
| | | | |
| P. | 75,0 | BUTYLDIGLYKOL | |
| | 25,0 | NETZMITTELLOESUNG FARBL | |
| | | | |
| Q. | Nacure 2500 | | |
| | para-Toluolsulphonsäure 25 %ig in IPA | | |
| | | | |
| R. | Aerosil R 972 | | |
| | | | |
| S. | 24,6 | PAROTAL EF 83.6 | Polyester |
| | 1,8 | PLURIOL P 900 | Netzmittel |
| | 1,8 | NEUTR.LSG.F.WASSER-BC | Dimethylethanolamin 10 %ig in VE-Wasser |
| | 24,8 | WASSER,VE | |
| | 1,3 | AEROSIL R 972 | Siliciumoxid |
| | 45,7 | TITAN RUTIL 2310 | Titandioxid |

| **Polyester aus TMXDI-PUR** | |
|---|---|
| 20,310 | PRIPOL 1013 |
| 12,340 | NEOPENTYLGLYKOL |
| 13,998 | 1,6-HEXANDIOL |
| 26,268 | ISOPHTHALSAEURE 99% |
| 1,100 | CYCLOHEXAN |
| 23,272 | METHYLETHYLKETON |
| 2,712 | METHYLETHYLKETON |

| **Polyester aus IPDI-PUR** | |
|---|---|
| 39,487 | PRIPOL 1013 |
| 21,739 | 1,6-HEXANDIOL |
| 11,689 | ISOPHTELALSAEURE 99% |
| 1,100 | CYCLOHEXAN |
| 23,272 | METHYLETHYLKETON |
| 2,713 | METHYLETHYLKETON |

## Patentansprüche

1. Wasserverdünnbares Überzugsmittel enthaltend Polyester, Polyurethan, Aminoplastharze sowie weitere lackübliche Zusatz- und Hilfsstoffe,
**dadurch gekennzeichnet, daß** das eingesetzte Polyurethan ein Gemisch ist, bestehend aus zwei unterschiedlichen Polyurethanverbindungen (A, B) im Gewichtsverhältnis der Polyurethanverbindungen (A, B) zwischen 3:1 und 1:3 wobei Polyurethanverbindung (A) erhältlich ist unter Verwendung eine Diisocyanates der Formel (I) 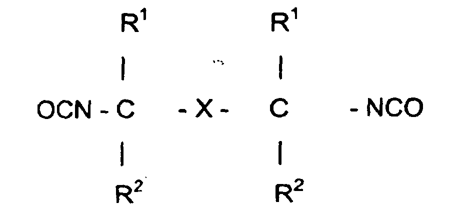 wobei X für einen zweiwertigen, aromatischen Kohlenwasserstoffrest und R¹, R² für einen Alkylrest mit ein bis vier Kohlenstoffatomen stehen.

2. Wasserverdünnbares Überzugsmittel nach Anspruch 1,
**dadurch gekennzeichnet, daß** die Polyurethanverbindungen (A,B) ein Molekulargewicht von 1000 bis 30000 und eine Säurezahl von 5 bis 20 mg KOH/g aufweisen und durch Umsetzung von Isocyanatgruppen aufweisenden Präpolymeren herstellbar sind.

3. Wasserverdünnbares Überzugsmittel nach Anspruch 1 oder 2,
**dadurch gekennzeichnet, daß** die eingesetzten Polyurethane herstellbar sind durch Umsetzung von aliphatischen, cycloaliphatischen und/oder aromatischen Polyisocyanaten mit wenigstens 2 Isocyanatgruppen pro Molekül.

4. Wasserverdünnbares Überzugsmittel nach einem der Ansprüche 1 bis 3,
**dadurch gekennzeichnet, daß** das Gewichtsverhältnis der Polyurethanverbindungen (A,B) zwischen 2:1 und 1:2 liegt.

5. Wasserverdünnbares Überzugsmittel nach einem der Ansprüche 1 bis 4,
**dadurch gekennzeichnet, daß** das Verhältnis von Polyester zur Polyurethangemisch zwischen 7:3 und 9:1 liegt.

6. Wasserverdünnbares Überzugsmittel nach einem der Ansprüche 1 bis 5,
**dadurch gekennzeichnet, daß** das Verhältnis des aus Polyester und Polyurethan bestehenden Gemisches zu Aminoplastharz zwischen 7:3 und 9:1liegt.

7. Wasserverdünnbares Überzugsmittel nach einem der Ansprüche 1 bis 6,
**dadurch gekennzeichnet, daß** er als weitere Zusatz- und Hilfsstoffe Entschäumer, Dispergierhilfsmittel, Emulgatoren, Verlaufsmittel enthält.

8. Verfahren zur Herstellung eines wasserverdünnbaren Überzugsmittels enthaltend Polyester, Polyurethan, Aminoplastharze sowie weitere lackübliche Zusatz- und Hilfsstoffe,
**dadurch gekennzeichnet, daß** ein Gemisch bestehend aus zwei unterschiedlichen Polyurethanverbindungen hergestellt wird und mit den weiteren Komponenten des wasserverdünnbaren Überzugsmittels vermischt werden.

9. Verfahren nach Anspruch 8,
**dadurch gekennzeichnet, daß** die Einarbeitung der farbgebenden Pigmente durch Anreiben in einer Polyurethanverbindung oder in dem Gemisch aus mehreren Polyurethanverbindungen erfolgt.

10. Verwendung des wasserverdünnbaren Überzugsmittels nach einem der Ansprüche 1 bis 7 zur Beschichtung von Metall und Kunststoffen., vorzugsweise von Automobilkarosserien.

11. Verwendung des wasserverdünnbaren Überzugsmittels nach einem der Ansprüche 1 bis 7 zur Beschichtung von Automobilkarosserien.

## Claims

1. Water-dilutable coating composition comprising polyester, polyurethane, amino resins and further customary coatings additives and auxiliaries, **characterized in that** the polyurethane used is a mixture consisting of two different polyurethane compounds (A, B) in a weight ratio of the polyurethane compounds (A, B) of from 3:1 to 1:3, polyurethane compound (A) being obtainable using a diisocyanate of the formula (I) 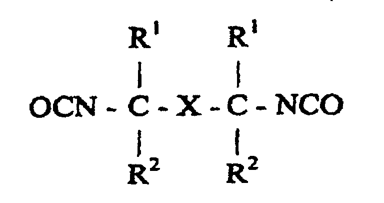 where X is a divalent, aromatic hydrocarbon radical and R¹, R² are an alkyl radical having from 1 to 4 carbon atoms.

2. Water-dilutable coating composition according to Claim 1, **characterized in that** the polyurethane compounds (A, B) have a molecular weight of from 1 000 to 30 000 and an acid number of from 5 to 20 mg KOH/g and are preparable by reacting prepolymers containing isocyanate groups.

3. Water-dilutable coating composition according to Claim 1 or 2, **characterized in that** the polyurethanes used are preparable by reacting aliphatic, cycloaliphatic and/or aromatic polyisocyanates containing at least 2 isocyanate groups per molecule.

4. Water-dilutable coating composition according to one of Claims 1 to 3, **characterized in that** the weight ratio of the polyurethane compounds (A, B) lies between 2:1 and 1:2.

5. Water-dilutable coating composition according to one of Claims 1 to 4, **characterized in that** the ratio of polyester to the polyurethane mixture is between 7:3 and 9:1.

6. Water-dilutable coating composition according to one of Claims 1 to 5, **characterized in that** the ratio of the mixture consisting of polyester and polyurethane to amino resin is between 7:3 and 9:1.

7. Water-dilutable coating composition according to one of Claims 1 to 6, **characterized in that** as further additives and auxiliaries it comprises defoamers, dispersing aids, emulsifiers, levelling agents.

8. Process for preparing a water-dilutable coating composition comprising polyester, polyurethane, amino resins and further customary coatings additives and auxiliaries, **characterized in that** a mixture consisting of two different polyurethane compounds is prepared and is mixed with the other components of the water-dilutable coating composition.

9. Process according to Claim 8, **characterized in that** the colour pigments are incorporated by dispersing in a polyurethane compound or in the mixture of two or more polyurethane compounds.

10. Use of the water-dilutable coating composition according to one of Claims 1 to 7 for the coating of metal and plastics, preferably of automobile bodies.

11. Use of the water-dilutable coating composition according to one of Claims 1 to 7 for the coating of automobile bodies.

## Revendications

1. Composition de revêtement diluable à l'eau, contenant un polyester, un polyuréthanne, des aminoplastes ainsi que d'autres adjuvants et additifs usuels dans des peintures, **caractérisée en ce que** le polyuréthanne utilisé est un mélange constitué de deux composés polyuréthanne différents (A, B) en un rapport pondéral des composés polyuréthanne (A, B) compris entre 3:1 et 1:3, le composé polyuréthanne (A) pouvant être obtenu avec utilisation d'un diisocyanate de formule (I) 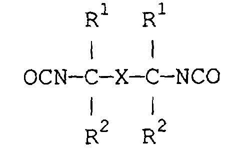 X représentant un radical hydrocarboné aromatique divalent et R¹, R² représentant un radical alkyle ayant un á quatre atomes de carbone.

2. Composition de revêtement diluable à l'eau selon la revendication 1, **caractérisée en ce que** les composés polyuréthanne (A, B) ont une masse moléculaire de 1 000 à 30 000 et un indice d'acide de 5 à 20 mg de KOH/g et peuvent être préparés par mise en réaction de prépolymères comportant des groupes isocyanate.

3. Composition de revêtement diluable à l'eau selon la revendication 1 ou 2, **caractérisée en ce que** les polyuréthannes utilisés peuvent être préparés par mise en réaction de polyisocyanates aliphatiques, cycloaliphatiques et/ou aromatiques comportant au moins 2 groupes isocyanate par molécule.

4. Composition de revêtement diluable à l'eau selon l'une quelconque des revendications 1 à 3, **caractérisée en ce que** le rapport pondéral des composés polyuréthanne (A, B) est compris entre 2:1 et 1:2.

5. Composition de revêtement diluable à l'eau selon l'une quelconque des revendications 1 à 4, **caractérisée en ce que** le rapport du polyester au mélange de polyuréthannes est compris entre 7:3 et 9:1.

6. Composition de revêtement diluable à l'eau selon l'une quelconque des revendications 1 à 5, **caractérisée en ce que** le rapport du mélange constitué de polyester et polyuréthanne à l'aminoplaste est compris entre 7:3 et 9:1.

7. Composition de revêtement diluable à l'eau selon l'une quelconque des revendications 1 à 6, **caractérisée en ce qu'**elle contient comme autres adjuvants et additifs des antimousses, des adjuvants de dispersion, des émulsifiants, des agents d'étalement.

8. Procédé pour la préparation d'une composition de revêtement diluable à l'eau, contenant un polyester, un polyuréthanne, des aminoplastes ainsi que d'autres adjuvants et additifs usuels dans des peintures, **caractérisé en ce qu'**on prépare un mélange constitué de deux composés polyuréthanne différents et on le mélange avec les autres composants de la composition de revêtement diluable à l'eau.

9. Procédé selon la revendication 8, **caractérisé en ce que** l'incorporation des pigments colorants s'effectue par broyage dans un composé polyuréthanne ou dans le mélange de plusieurs composés polyuréthanne.

10. Utilisation de la composition de revêtement diluable à l'eau selon l'une quelconque des revendications 1 à 7, pour le revêtement de métal et de matières plastiques, de préférence de carrosseries d'automobiles.

11. Utilisation de la composition de revêtement diluable à l'eau selon l'une quelconque des revendications 1 à 7, pour le revêtement de carrosseries d'automobiles.
